# EUROPÄISCHE PATENTSCHRIFT

(11) **EP 3 936 265 B1**
(45) Veröffentlichungstag und Bekanntmachung des Hinweises auf die Patenterteilung: **08.01.2025**
(21) Anmeldenummer: 20184416.4
(22) Anmeldetag: 07.07.2020
(51) Int. Cl.: B23B 29/034

(54) **SPINDELKOPFSYSTEM MIT SPINDELKOPFVERSTELLVORRICHTUNG**
BORING HEAD SYSTEM WITH BORING HEAD ADJUSTING DEVICE
SYSTÈME DE TÊTE D'ALESAGE AVEC DISPOSITIF DE RÉGLAGE DE TÊTE D'ALESAGE

(43) Veröffentlichungstag der Anmeldung: 12.01.2022
(73) Patentinhaber: CERATIZIT Besigheim GmbH, 74354 Besigheim (DE)
(72) Erfinder: Gärtner, Urban, 74354 Besigheim (DE); Schweiker, Albrecht, 74354 Besigheim (DE)
(74) Vertreter: Ciesla, Dirk

(56) Entgegenhaltungen:
- DE-B1- 2 516 110
- US-A- 1 935 493
- US-A- 2 395 628

## Beschreibung

Die vorliegende Erfindung betrifft ein Spindelkopfsystem, umfassend einen Spindelkopf und eine Spindelkopfverstellvorrichtung, wobei der Spindelkopf ein sich entlang einer Spindelkopfdrehachse erstreckendes Spindelkopfgehäuse und einen von dem Spindelkopfgehäuse zur Spindelkopfdrehachse senkrecht verstellbar gelagerten Querschlitten aufweist und die Spindelkopfverstellvorrichtung zur Querschlittenverstellung des Querschlittens ausgebildet ist.

Die EP 0 259 570 A1 zeigt einen Spindelkopf mit einem verstellbar gelagerten Querschlitten und einer Spindelkopfverstellvorrichtung. Die Spindelkopfverstellvorrichtung ist dazu eingerichtet, den Querschlitten gegenüber einer Spindeldrehachse senkrecht zu verstellen. Der Spindelkopf kann daher zum Beispiel zum Ausdrehen verwendet werden.

Die in EP 0 259 570 A1 gezeigte Spindelkopfverstellvorrichtung weist einen innerhalb des Spindelkopfes axial verstellbar gelagerten Verstellkolben auf. Ein axialer Fortsatz des Verstellkolbens ist gegenüber der Spindeldrehachse geneigt und greift in eine Ausnehmung des Querschlittens so ein, dass eine axiale Verstellung des Verstellkolbens in eine Verstellbewegung des Querschlittens senkrecht zu einer Spindeldrehachse umgewandelt wird.

Die DE 25 16 110 B1 zeigt einen Werkzeugkopf und einen Einstellring.

Die US 1 935 493 A zeigt einen Werkzeughalter.

Der Nachteil von einer solchermaßen realisierten Spindelkopfverstellvorrichtung ist, dass diese aufgrund ihrer Ausbildung innerhalb des Spindelkopfes zu einem komplizierten Aufbau des Spindelkopfes führt. Dadurch werden der Spindelkopf und die Spindelkopfverstellvorrichtung in der Herstellung teuer.

Der Erfindung liegt daher die Aufgabe zugrunde, ein Spindelkopfsystem zu schaffen, das bei einem einfachen und kostengünstigen Aufbau eine Querschlittenverstellung ermöglicht.

Die Aufgabe wird durch ein Spindelkopfsystem nach Anspruch 1 gelöst. Vorteilhafte Weiterbildungen von dem Spindelkopfsystem sind den von Anspruch 1 abhängigen Ansprüchen zu entnehmen.

Eine Spindelkopfverstellvorrichtung zur Querschlittenverstellung weist einen Spindelkopfrahmen zum Aufsetzen auf einen einen Querschlitten tragenden Spindelkopf, ein erstes Verstellelement und ein gegenüberliegend von dem ersten Verstellelement angeordnetes zweites Verstellelement auf, wobei das erste Verstellelement und das zweite Verstellelement jeweils an dem Spindelkopfrahmen in einen Rahmeninnenbereich des Spindelkopfrahmens hinein ausfahrbar und aus dem Rahmeninnenbereich heraus einfahrbar gelagert sind. Der Querschlitten kann also verstellt werden, indem der Spindelkopfrahmen lediglich auf den Spindelkopf aufgesetzt wird und der Spindelkopfrahmen so orientiert wird, dass die Bewegung des ersten Verstellelements und/oder des zweiten Verstellelements beim jeweiligen Ausfahren in den Rahmeninnenbereich hinein auf den Querschlitten übertragen werden kann. Der Spindelkopf kann dementsprechend gegenüber einer Realisierung mit internem Verstellmechanismus konstruktiv einfacher aufgebaut werden. Es werden bezüglich eines Verstellmechanismus zur Querschlittenverstellung weniger stationär in den Spindelkopf eingebaute Bauteile benötigt, weil die Spindelkopfverstellvorrichtung einen externen sowie von dem Spindelkopf reversibel lösbaren Verstellmechanismus bereitstellt. Die für die Querschlittenverstellung benötigten Bauteile sind also aufseiten der Spindelkopfverstellvorrichtung vorgesehen, was die Anzahl der internen Bauteile aufseiten des Spindelkopfes reduziert.

Die Spindelkopfverstellvorrichtung lässt sich also auf den Spindelkopf aufsetzen, vorzugsweise auf eine Außenseite eines Spindelkopfgehäuses von dem Spindelkopf, zum Beispiel als ringförmig geschlossenes Element.

In einem aufgesetzten Zustand von der Spindelkopfverstellvorrichtung lässt sich der Querschlitten in zwei zueinander entgegengesetzte Richtungen, die jeweils senkrecht zur Spindeldrehachse orientiert sind, verstellen; die Spindeldrehachse lässt sich zu einer Längsachse von der Spindelkopfverstellvorrichtung fluchtend anordnen. Die eine senkrechte Richtung ist die Richtung, in die das erste Verstellelement ausgefahren werden kann, die dazu entgegengesetzte andere senkrechte Richtung ist die, in die das zweite Verstellelement ausgefahren werden kann.

Während der Verstellung des Querschlittens durch das erste Verstellelement kontaktiert das erste Verstellelement den Querschlitten. Analoges gilt für die Verstellung des Querschlittens durch das zweite Verstellelement.

Wenn die Verstellung des Querschlittens durch das Ausfahren von dem ersten Verstellelement in den Rahmeninnenbereich hinein erfolgt, muss das zweite Verstellelement insoweit aus dem Rahmeninnenbereich heraus eingefahren werden, dass die durch das erste Verstellelement bewirkte Verstellung des Querschlittens nicht durch das zweite Verstellelement blockiert wird und umgekehrt.

Mit in den Rahmeninnenbereich hinein ausfahrbar ist gemeint, dass das erste Verstellelement und das zweite Verstellelement jeweils bezüglich von dort, wo sie am Spindelkopfrahmen jeweils gelagert sind, ausgefahren werden können, so dass sie nach dem Ausfahren jeweils weiter in den Rahmeninnenbereich hineinragen als vor dem Ausfahren. Analoges ist mit aus dem Rahmeninnenbereich heraus einfahrbar gemeint, also dass die Verstellelemente nach dem Einfahren jeweils weniger weit in den Rahmeninnenbereich hineinragen als vor dem Einfahren.

Der Spindelkopfrahmen kann nach erfolgter Verstellung des Querschlittens von dem Spindelkopf abgesetzt werden, d. h. von dem Spindelkopf reversibel lösbar entfernt werden, zum Beispiel lediglich durch Überwinden einer Reibungskraft zwischen dem Spindelkopfrahmen und dem Spindelkopf, also analog zum Abziehen von einem umfänglich geschlossenen Ring von einer Welle.

Vorzugsweise ist bzw. sind das erste Verstellelement und/oder das zweite Verstellelement aus dem Rahmeninnenbereich jeweils vollständig einfahrbar an dem Spindelkopfrahmen gelagert, wonach nach dem entsprechenden vollständigen Einfahren das jeweilige dieser Verstellelemente nicht mehr in den Rahmeninnenbereich hineinragt. Dadurch kann der Spindelkopfrahmen noch einfacher von dem Spindelkopf abgesetzt werden, weil das jeweilige dieser Verstellelemente nach dem vollständigen Einfahren nicht mehr mit dem Spindelkopf beim Absetzen des Spindelkopfrahmens kollidieren kann.

Mit dem Rahminnenbereich ist der Bereich gemeint, der von dem Spindelkopfrahmen umfänglich umgeben wird und innerhalb dessen der Spindelkopf angeordnet werden soll.

Vorzugsweise erstrecken sich das erste Verstellelement und das zweite Verstellelement jeweils entlang einer Längsachse und ist die Längsachse des ersten Verstellelements zur Längsachse des zweiten Verstellelements fluchtend angeordnet. Dies erlaubt eine kippmomentfreie Verstellung des Querschlittens.

Gemäß einer Weiterbildung der Spindelkopfverstellvorrichtung ist der Rahmeninnenbereich durchgängig offen ausgebildet. Dadurch kann der Spindelkopfahmen etwa im Sinne eines Ringes oder dergleichen auf den Spindelkopf aufgesetzt werden bzw. kann der Spindelkopf durch den Spindelkopfrahmen durchgeführt angeordnet werden. So kann in vorteilhafterweise ein an dem Querschlitten montiertes Zerspanungswerkzeug, welches sich üblicherweise bezüglich einer Stirnseite des Spindelkopfes axial weiter nach vorne erstreckt als der Spindelkopf, an dem Querschlitten verbleiben, während der Querschlitten durch die Spindelkopfverstellvorrichtung verstellt wird. Die Demontage des Zerspanungswerkzeugs, um Platz für das Aufsetzen der Spindelkopfverstellvorrichtung auf den Spindelkopf zu schaffen, entfällt also. Die dadurch eingesparte Demontagezeit und Montagezeit steht für eine Werkstückbearbeitung, zum Beispiel ein Ausdrehen, mittels des Spindelkopfes zur Verfügung.

Gemäß einer Weiterbildung der Spindelkopfverstellvorrichtung ist mindestens das erste Verstellelement zur Umwandlung einer Drehbewegung in eine lineare Verstellbewegung an dem Spindelkopfrahmen gelagert. Dies ist hinsichtlich einer präzisen Verstellung des Querschlittens vorteilhaft, weil die Drehbewegung anhand einer Anzahl von Umdrehungen bemessen werden kann und ein linearer Zusammenhang zwischen der Anzahl von Umdrehungen und der von dem ersten Verstellelement ausgefahrenen bzw. eingefahrenen Strecke besteht. Mit anderen Worten ausgedrückt, pro Umdrehung des ersten Verstellelements ergibt sich ein exakter Hub des ersten Verstellelements. So kann das erste Verstellelement ein Außengewinde aufweisen, das in ein dazu passendes Innengewinde des Spindelkopfrahmens eingreift. Der zwischen dem Außengewinde und dem Innengewinde realisierte Gewindeeingriff sorgt zusätzlich für eine axiale Selbstarretierung des ersten Verstellelements in Abwesenheit der Drehbewegung. Das zweite Verstellelement kann zusätzlich zum ersten Verstellelement ebenfalls zur Umwandlung einer Drehbewegung in eine lineare Verstellbewegung an dem Spindelkopfrahmen gelagert sein, indem es zum Beispiel dem ersten Verstellelement analog ein Außengewinde aufweist, das in ein dazu passendes Innengewinde des Spindelkopfrahmens eingreift.

Gemäß einer Weiterbildung der Spindelkopfverstellvorrichtung weisen das erste Verstellelement und das zweite Verstellelement jeweils ein in den Spindelkopfrahmen eingeschraubtes Außengewinde auf und ist die Drehrichtung des Außengewindes von dem ersten Verstellelement der Drehrichtung des Außengewindes von dem zweiten Verstellelement gleich. So können das Außengewinde des ersten Verstellelements und das Außengewinde des zweiten Verstellelements jeweils entweder als Rechtsgewinde oder als Linksgewinde ausgebildet sein. Im Falle der beiden Rechtsgewinde kann zum Beispiel das erste Verstellelement durch eine Drehbewegung, die außerhalb des Rahmeninnenbereichs im Uhrzeigersinn initiiert wird, in den Rahmeninnenbereich hinein ausgefahren werden und das zweite Verstellelement durch eine Drehbewegung, die außerhalb des Rahmeninnenbereichs entgegengesetzt zum Uhrzeigersinn initiiert wird, aus dem Rahmeninnenbereich heraus eingefahren werden und umgekehrt. Analoges gilt im Falle der beiden Linksgewinde. Die Realisierung der Außengewinde als jeweils Rechtsgewinde ist jedoch ergonomisch besonders vorteilhaft, wenn die beiden Verstellelemente durch einen Rechtshänder jeweils betätigt werden. Denn der Rechtshänder kann im Falle einer Rechtsdrehung ein größeres Drehmoment auf das erste Verstellelement und das zweite Verstellelement jeweils aufbringen und so einen Reibungswiderstand beim Ausfahren des ersten Verstellelements und des zweiten Verstellelements gegen den Querschlitten jeweils leichter überwinden; beim Einfahren des ersten Verstellelements und des zweiten Verstellelements aus dem Rahmeninnenbereich jeweils heraus entfernt sich das jeweilige dieser Verstellelemente von dem Querschlitten.

Gemäß einer Weiterbildung der Spindelkopfverstellvorrichtung weist mindestens das erste Verstellelement einen Drehantriebsabschnitt zum Drehantreiben des ersten Verstellelements auf, ist der Drehantriebsabschnitt außerhalb des Rahmeninnenbereichs angeordnet und bildet einen Anschlag zum Anschlagen gegen eine Rahmenaußenseite des Spindelkopfrahmens bezüglich eines Ausfahrens des ersten Verstellelements in den Rahmeninnenbereich hinein. Dadurch wird der durch das erste Verstellelement zurücklegbare Verstellweg begrenzt, so dass eine maximale Querschlittenverstellung in eine Richtung senkrecht zur Spindeldrehachse exakt reproduziert werden kann. Weil der Drehantriebsabschnitt als Anschlag ausgebildet ist, ragt dieser Teil des ersten Verstellelements senkrecht zur Längsachse des ersten Verstellelements weiter heraus als der übrige Teil des ersten Verstellelements. Mithilfe des Drehantriebsabschnitts kann dadurch bei gleicher Kraft ein größeres Drehmoment zum Ausfahren des ersten Verstellelements in den Rahmeninnenbereich hinein aufgebracht werden. Dies erleichtert insbesondere die manuelle Betätigung des ersten Verstellelements. Das zweite Verstellelements kann ebenfalls einen Drehantriebsabschnitt aufweisen, der dem Drehantriebsabschnitt des ersten Verstellelements analog ausgebildet und angeordnet ist.

Gemäß einer Weiterbildung der Spindelkopfverstellvorrichtung ist der Drehantriebsabschnitt einen maximalen translatorischen Verstellweg des ersten Verstellelements beim Ausfahren in den Rahmeninnenbereich hinein begrenzend und liegt der maximale translatorische Verstellweg im Bereich von 5 mm bis 20 mm. Dies ist ein für Spindelköpfe mit einem maximalen Außendurchmesser von bis zu 60 mm und einem verstellbaren Querschlitten besonders zweckmäßiger Bereich, weil ein größerer translatorischer Verstellweg, d. h. eine größere Verstellung des Querschlittens, zu einer überkritischen Unwucht des Spindelkopfes führt, wie sich gezeigt hat.

Gemäß einer Weiterbildung der Spindelkopfverstellvorrichtung ist der Spindelkopfrahmen als sich entlang einer Zylinderachse erstreckender axial durchgängig offener Hohlzylinderkörper ausgebildet, ist der Spindelkopfrahmen den Rahmeninnenbereich umfänglich geschlossen umgebend ausgebildet und ist mindestens das erste Verstellelement senkrecht zur Zylinderachse verstellbar an dem Spindelkopfrahmen gelagert. Hierbei handelt es sich um eine besonders einfache und damit kostengünstige sowie wartungsarme Weiterbildung der Spindelkopfverstellvorrichtung, weil der Spindelkopfrahmen lediglich als Hohlzylinderkörper ausgebildet ist, der aufgrund seiner umfänglich geschlossenen Ausbildung auf einen Spindelkopf direkt aufgesetzt werden. Es ist vorteilhaft, wenn der Spindelkopf im Falle eines zylindrischen Spindelkopfgehäuses einen Außendurchmesser hat, der in dem Maße größer ist als ein Innendurchmesser des Spindelkopfrahmens, dass der Spindelkopfrahmen dadurch kraftschlüssig auf den Spindelkopf aufgesetzt werden kann. Denn in diesem Falle werden aufseiten des Spindelkopfrahmens keine weiteren konstruktiven Maßnahmen, zum Beispiel Schraubenverbindungen, benötigt, um den Spindelkopfrahmen auf den Spindelkopf aufzusetzen und nach abgeschlossener Querschlittenverstellung von dem Spindelkopf abzusetzen.

Gemäß einer Weiterbildung der Spindelkopfverstellvorrichtung ist das erste Verstellelement von dem zweiten Verstellelement derart mechanisch entkoppelt, dass das erste Verstellelement in den Rahmeninnenbereich hinein ausgefahren werden kann, während das zweite Verstellelement stillsteht. Die Spindelkopfverstellvorrichtung wird dadurch bezüglich ihres Aufbaus noch einfacher, weil ein apparativer Kopplungsmechanismus, der das Ausfahren des ersten Verstellelements in den Rahmeninnenbereich hinein mit einem Einfahren des zweiten Verstellelements aus dem Rahmeninnenbereich heraus koppeln würde, entfällt. Es hat sich gezeigt, dass für die Querschlittenverstellung das Augenmaß eines Bedieners ausreicht, um das zweite Verstellelement aus dem Rahmeninnenbereich hinreichend weit heraus einzufahren, so dass die Querschlittenverstellung durch das Ausfahren des ersten Verstellelements in den Rahmeninnenbereich hinein nicht blockiert wird und umgekehrt. Mit mechanisch entkoppelt ist gemeint, dass das erste Verstellelement zum Beispiel im Sinne einer Schraube gedreht werden kann, während das zweite Verstellelement stillsteht und umgekehrt.

Gemäß einer Weiterbildung der Spindelkopfverstellvorrichtung weist der Spindelkopfrahmen eine durchgängig offene Einführungsausnehmung zum Einführen eines Stellwerkzeugabschnitts in den Rahmeninnenbereich hinein auf. Üblicherweise reicht die Reibung zwischen dem Querschlitten und dem übrigen Spindelkopf nicht aus, um den Querschlitten während zum Beispiel des Ausdrehens hinreichend zu arretieren, d. h. der Querschlitten würde bei radialer Belastung in Abwesenheit einer apparativen Arretierung radial außen oder radial nach innen wandern. Indem die Einführungsausnehmung vorgesehen ist, kann folglich ein mittels mindestens einer Klemmschraube realisierter Arretiermechanismus zur Querschlittenarretierung im aufgesetzten Zustand des Spindelkopfrahmens mittels des Stellwerkzeugabschnitts betätigt werden, d. h. die ansonsten bestehende Gefahr, dass die nach abgeschlossener Querschlittenverstellung erreichte Querschlittenposition ungewollt verändert wird, entfällt, weil der Arretiermechanismus über die Einführausnehmung im aufgesetzten Zustand des Spindelkopfrahmens weiterhin zugänglich und damit betätigbar ist. Die Einführungsausnehmung ist vorzugsweise als Langloch ausgebildet, weil dies eine gegenüber einer Klemmschraubenachse einer Klemmschraube des Arretiermechanismus geneigte Einführbewegung des Stellwerkzeugabschnitts durch den Spindelkopfrahmen hindurch erlaubt, d. h. der Bediener hat beim Einführen mehr Spiel zur Verfügung, was das Einführen für ihn erleichtert. Außerdem können mittels eines solchen Langlochs auch Arretiermechanismen mit mehreren Klemmschrauben im aufgesetzten Zustand des Spindelkopfrahmens betätigt werden. Vorzugsweise ist die Einführungsausnehmung in Umfangsrichtung des Spindelkopfrahmens betrachtet zwischen dem ersten Verstellelement und dem zweiten Verstellelement angeordnet, weil dadurch die Gefahr einer Kollision des Stellwerkzeugabschnitts mit diesen Verstellelementen reduziert wird.

Die erwähnte Klemmschraube des Arretiermechanismus durchsetzt zum Beispiel den Querschlitten und ist außerhalb des Querschlittens in den Spindelkopf eingeschraubt, die Klemmschraube wirkt also in einem solchermaßen befestigten Zustand als Sperrelement. Wird die Klemmschraube außerhalb des Querschlittens außer Eingriff mit dem Spindelkopf gebracht, ist der Querschlitten hingegen in Richtung senkrecht zur Spindeldrehachse, welche mit einer Längsachse des Spindelkopfrahmens fluchtet, beweglich und kann mittels der Spindelkopfverstellvorrichtung verstellt werden.

Das Spindelkopfsystem umfasst einen Spindelkopf und eine Spindelkopfverstellvorrichtung, wobei der Spindelkopf ein sich entlang einer Spindelkopfdrehachse erstreckendes Spindelkopfgehäuse und einen von dem Spindelkopfgehäuse zur Spindelkopfdrehachse senkrecht verstellbar gelagerten Querschlitten aufweist und die Spindelkopfverstellvorrichtung zur Querschlittenverstellung des Querschlittens ausgebildet ist, wobei die Spindelkopfverstellvorrichtung nach Anspruch 1 und/oder einem der von Anspruch 1 abhängigen Ansprüche und/oder hier offenbarten anderen Ausführungsformen ausgebildet ist und wobei der Spindelkopfrahmen auf eine Gehäuseaußenseite des Spindelkopfgehäuses reversibel lösbar aufsetzbar ausgebildet ist. Die für die Spindelkopfverstellvorrichtung offenbarten Vorteile werden dadurch bei dem Spindelkopfsystem realisiert. Das Spindelkopfsystem kann den bereits auf die Gehäuseaußenseite aufgesetzten Spindelkopfrahmen solchermaßen angeordnet aufweisen oder, im Sinne eines Bausatzes, den von der Gehäuseaußenseite abgesetzten Spindelkopfrahmen solchermaßen angeordnet aufweisen. Die Spindelkopfdrehachse ist mit einer Spindeldrehachse einer Spindel, welche mit dem Spindelkopf drehfest verbunden werden kann, fluchtend anordenbar.

Der Querschlitten weist eine erste Einbuchtung zur seitlichen Führung des ersten Verstellelements auf, wobei sich die erste Einbuchtung parallel zu einer senkrecht zur Spindelkopfdrehachse orientierten Verstellrichtung des Querschlittens erstreckt und das erste Verstellelement in die erste Einbuchtung hinein ausfahrbar am Spindelkopfrahmen gelagert. Ein Ausbrechen des ersten Verstellelements aus dem Querschlitten wird während der Querschlittenverstellung dadurch vermieden. Auch wird eine parallel zur Verstellrichtung des Querschlittens erfolgte Ausrichtung des ersten Verstellelements aufgrund der seitlichen Führung des ersten Verstellelements beibehalten, was ein exakte Verstellung des Querschlittens durch Ausfahren des ersten Verstellelements in den Rahmeninnenbereich hinein erlaubt.

Der Querschlitten kann zusätzlich zur ersten Einbuchtung eine zweite Einbuchtung aufweisen, wobei die zweite Einbuchtung zur seitlichen Führung des zweiten Verstellelements ausgebildet ist, sich parallel zu der Verstellrichtung des Querschlittens erstreckt und das zweite Verstellelement in die zweite Einbuchtung hinein ausfahrbar am Spindelkopfrahmen gelagert ist. Die für die erste Einbuchtung beschriebenen Vorteile werden damit aufseiten der zweiten Einbuchtung beim Ausfahren des zweiten Verstellelements in den Rahmeninnenbereich hinein analog realisiert, d. h. bezüglich der Querschlittenverstellung durch das zweite Verstellelement.

Gemäß einer Weiterbildung des Spindelkopfsystems ist die erste Einbuchtung in Blickrichtung parallel zur Spindelkopfdrehachse offen ausgebildet. Dies erleichtert die Anordnung des ersten Verstellelements innerhalb der ersten Einbuchtung beim Aufsetzen des Spindelkopfrahmens auf die Gehäuseaußenseite und damit die beschriebene Ausrichtung des ersten Verstellelements parallel zur Verstellrichtung des Querschlittens. Letzteres, weil die erste Einbuchtung sich parallel zur Verstellrichtung des Querschlittens erstreckt. In Blickrichtung parallel zur Spindelkopfdrehachse ist die erste Einbuchtung also aufgrund ihrer in diese Richtung offenen Ausbildung frei einsehbar. Im Falle einer in Blickrichtung parallel zur Spindelkopfdrehachse geschlossenen ersten Einbuchtung würde hingegen diese durch den Spindelkopfrahmen und das erste Verstellelement im auf die Gehäuseaußenseite aufgesetzten Zustand des Spindelkopfrahmens durch diesen verdeckt werden, was die Ausrichtung des ersten Verstellelements parallel Verstellrichtung des Querschlittens erschwert.

Vorzugsweise ist die erste Einbuchtung auf einer vorderen Seite des Spindelkopfes offen ausgebildet; mit vorderer Seite ist die Seite gemeint, die für eine Anordnung eines Zerspanungswerkzeugs am Querschlitten vorgesehen ist. Denn der Spindelkopfrahmen wird vorzugsweise in Blickrichtung auf die vordere Seite auf die Gehäuseaußenseite aufgesetzt, weil eine hintere Seite des Spindelkopfes üblicherweise mit einer Spindel verbunden ist, was das Aufsetzen des Spindelkopfrahmens aufseiten der hinteren Seite erschwert.

Die in Blickrichtung parallel zur Spindelkopfdrehachse offene erste Einbuchtung kann zum Beispiel als Längsnut ausgebildet sein. Die beschriebene zweite Einbuchtung kann ebenfalls in Blickrichtung parallel zur Spindelkopfdrehachse offen ausgebildet sein, zum Beispiel als Längsnut.

Gemäß einer Weiterbildung des Spindelkopfsystems ist der Spindelkopfrahmen relativ zur Gehäuseaußenseite um die Spindelkopfdrehachse drehbar aufsetzbar ausgebildet und ist die erste Einbuchtung derart ausgebildet, dass das erste Verstellelement in Blickrichtung parallel zur Spindelkopfdrehachse unter einer anfänglichen Schrägstellung zur ersten Einbuchtung in die erste Einbuchtung hinein ausfahrbar am Spindelkopfrahmen gelagert ist. Dadurch wird die Ausrichtung des ersten Verstellelements parallel zur Verstellrichtung des Querschlittens noch weiter erleichtert. Denn durch die anfängliche Schrägstellung des ersten Verstellelements zur ersten Einbuchtung wird beim weiteren Ausfahren des ersten Verstellelements in die erste Einbuchtung hinein der Spindelkopfrahmen relativ zur Gehäuseausseite um die Spindelkopfdrehachse gedreht, bis das erste Verstellelement parallel zur Verstellrichtung des Querschlittens ausgerichtet ist. Das Ausmaß der Schrägstellung wird also sukzessive reduziert, wenn das erste Verstellelement von der anfänglichen Schrägstellung aus in die erste Einbuchtung hinein weiter ausgefahren wird; die Drehung des Spindelrahmens wird aufgrund seiner beschriebenen drehbaren Anordnung auf der Gehäuseaußenseite nicht blockiert. Das erste Verstellelement wird also aufgrund der anfangs gegebenen Schrägstellung und dem ausgehend davon weiteren Ausfahren des ersten Verstellelements parallel zur Verstellrichtung des Querschlittens ausgerichtet. Mit der Schrägstellung ist gemeint, dass in Blickrichtung parallel zur Spindelkopfdrehachse eine Längsachse des ersten Verstellelements eine Längsachse der ersten Einbuchtung kreuzt, die Längsachsen fluchten also nicht; die Längsachse der ersten Einbuchtung ist senkrecht zur Spindelkopfdrehachse angeordnet. Nachdem die beschriebene Ausrichtung abgeschlossen ist, die Längsachsen also fluchten, wird der Spindelkopfrahmen nicht mehr beim weiteren Ausfahren des ersten Verstellelements dadurch gedreht, d. h. die Längsachse des ersten Verstellelements fluchtet dann mit der Längsachse der ersten Einbuchtung oder ist zumindest parallel zu dieser.

Die beschriebene zweite Einbuchtung kann derart ausgebildet sein, dass das zweite Verstellelement in Blickrichtung parallel zur Spindelkopfdrehachse unter einer anfänglichen Schrägstellung zur zweiten Einbuchtung in die zweite Einbuchtung hinein ausfahrbar am Spindelkopfrahmen gelagert ist, wobei der Spindelkopfrahmen relativ zur Gehäuseaußenseite um die Spindelkopfdrehachse drehbar aufsetzbar ausgebildet ist. Die für die Schrägstellung des ersten Verstellelements bezüglich der ersten Einbuchtung beschriebenen Vorteile werden aufseiten der zweiten Einbuchtung analog realisiert, sodass das zweite Verstellelement durch das Ausfahren in die zweite Einbuchtung hinein ausgerichtet werden kann.

Gemäß einer Weiterbildung des Spindelkopfsystems weist der Querschlitten eine zweite Einbuchtung zur seitlichen Führung des zweiten Verstellelements auf, erstreckt die zweite Einbuchtung sich parallel zur Verstellrichtung des Querschlittens, ist das zweite Verstellelement in die zweite Einbuchtung hinein ausfahrbar am Spindelkopfrahmen gelagert und ist eine senkrecht zur Spindelkopfdrehachse bemessene maximale Tiefe der zweiten Einbuchtung von einer senkrecht zur Spindelkopfdrehachse bemessenen maximalen Tiefe der ersten Einbuchtung verschieden. Dadurch wird Platz zum gegenüber der Spindelkopfdrehachse exzentrischen Befestigen eines Zerspanungswerkzeugs am Querschlitten gewonnen, d. h. eine Werkzeugaufnahmeausnehmung in Form einer Bohrung in den Querschlitten hinein kann exzentrisch angeordnet werden. So kann die maximale Tiefe der ersten Einbuchtung größer sein als die maximale Tiefe der zweiten Einbuchtung.

Gemäß einer Weiterbildung des Spindelkopfsystems weist der Spindelkopf ein verstellbares Arretierelement zum reversibel lösbaren Arretieren des Querschlittens relativ zum Spindelkopfgehäuse auf und ist die Spindelkopfverstellvorrichtung nach Anspruch 12 ausgebildet. Dadurch kann das Arretierelement, zum Beispiel eine Klemmschraube, zum Arretieren oder Lösen einer Arretierung des Querschlittens jeweils im aufgesetzten Zustand des Spindelkopfrahmens verstellt werden. Die Gefahr einer unerwünschten Querschlittenverstellung in der Zeit zwischen der Querschlittenverstellung und der Arretierung des Querschlittens wird also vermieden. Denn der Querschlitten kann durch das erste Verstellelement und ggf. das zweite Verstellelement in der gewünschten Querschlittenposition gehalten werden, während das Arretierelement zur Arretierung des Querschlittens verstellt werden kann, und zwar durch das Einführen des Stellwerkzeugabschnitts durch die Einführungsausnehmung hindurch und dessen Verwendung zum Verstellen des Arretierelements.

Weitere Vorteile und Zweckmäßigkeiten der vorliegenden Erfindung ergeben sich anhand der nachfolgenden Beschreibung von einem Spindelkopf, einer Spindelkopfverstellvorrichtung und einem Spindelkopfsystem unter Bezugnahme auf die beigefügten Figuren.

Von den Figuren zeigen:
- Fig. 1:: in einer Seitenansicht mit Blickrichtung senkrecht auf eine Spindelkopfdrehachse eine schematische Darstellung eines Spindelkopfes mit einem verstellbar gelagerten Querschlitten und einem optionalen Zerspanungswerkzeug;
- Fig. 2:: in einer Seitenansicht mit Blickrichtung entlang des Pfeils II aus Fig. 1 eine schematische Darstellung des Spindelkopfes aus Fig. 1;
- Fig. 3:: eine schematische Darstellung eines Längsschnitts durch den Spindelkopf aus Fig. 1 gemäß der Schnittlinie III aus Fig. 2;
- Fig. 4:: eine perspektivische, schematische Darstellung einer Spindelkopfverstellvorrichtung in Blickrichtung von schräg oben links;
- Fig. 5:: in einer Draufsicht mit Blickrichtung entlang des Pfeils V aus Fig. 1 eine schematische Darstellung eines Spindelkopfsystems, welches den Spindelkopf aus Fig. 1 bis Fig. 3 und die auf den Spindelkopf aufgesetzte Spindelkopfverstellvorrichtung aus Fig. 4 umfasst;
- Fig. 6:: eine schematische Darstellung eines Längsschnitts durch das Spindelkopfsystem aus Fig. 5 gemäß der Schnittlinie VI aus Fig. 5;
- Fig. 7a:: eine schematische Darstellung einer anfänglichen Schrägstellung eines Verstellelements beim Ausfahren in eine Einbuchtung im Sinne der vorliegenden Offenbarung;
- Fig. 7b:: eine schematische Darstellung des Verstellelements aus Fig. 7a, nachdem das Verstellelement parallel zu einer Verstellrichtung innerhalb der Einbuchtung ausgerichtet ist.

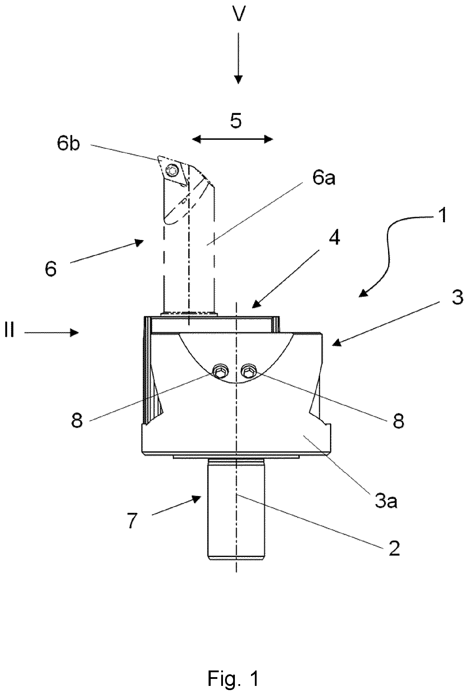

Ein in Fig. 1 gezeigter Spindelkopf 1 ist um eine Spindelkopfdrehachse 2 drehantreibbar. Der Spindelkopf 1 hat ein Spindelkopfgehäuse 3. Das Spindelkopfgehäuse 3 hat eine Gehäuseaußenseite 3a. In dem Spindelkopfgehäuse 3 ist ein Querschlitten 4 senkrecht zur Spindelkopfdrehachse 2 in die zueinander entgegengesetzten Richtungen des Doppelpfeils 5 verstellbar gelagert ist.

An dem Querschlitten 4 ist ein optionales Zerspanungswerkzeug 6 befestigt; denkbar und auch möglich ist auch die Befestigung eines Umformwerkzeugs, welches zum Beispiel zum Glätten und/oder Bördeln ausgebildet ist, oder eines anderen Werkzeugs, welches zum Beispiel zum Bürsten ausgebildet ist.

Das optionale Zerspanungswerkzeug 6 hat einen sich gegenüber dem Spindelkopfgehäuse 3 nach vorne erstreckenden Werkzeugarm 6a und einen an dem Werkzeugarm 6a befestigten Schneideinsatz 6b.

Der solchermaßen mit dem Zerspanungswerkzeug 6 versehene Spindelkopf 1 kann aufgrund der Verstellbarkeit des Querschlittens 4 und damit des Zerspanungswerkzeugs 6 jeweils senkrecht zur Spindelkopfdrehachse 2 zum Ausdrehen, d. h. einer Vergrößerung einer bereits erzeugten Bohrung, verwendet werden. Der Spindelkopf 1 kann daher auch als Ausdrehkopf bezeichnet werden.

Das Spindelkopfgehäuse 3 weist einen sich parallel zur Spindelkopfdrehachse 2 erstreckenden zylindrischen Verbindungsabschnitt 7 auf. Der Verbindungsabschnitt 7 kann mit einer nicht dargestellten Werkzeugspindel, kurz Spindel, drehfest verbunden werden, so dass der Spindelkopf 1 um eine mit der Spindelkopfdrehachse 2 fluchtende Spindeldrehachse gedreht, also angetrieben, werden kann.

In Fig. 1 sind außerdem zwei Arretierelemente 8 ersichtlich, die im Eingriff mit dem Spindelkopfgehäuse 3 und dem Querschlitten 4 jeweils stehen; denkbar und auch möglich ist auch eine von zwei verschiedene Anzahl der Arretierelemente 8. Die Arretierelemente 8 arretieren also den Querschritten 4 relativ zum Spindelkopfgehäuse 3 gegen eine Verstellung des Querschlittens 4 in beide Richtungen des Doppelpfeils 5. Werden die Arretierelemente 8 außer Eingriff mit dem Spindelkopfgehäuse 3 gebracht, lässt sich der Querschlitten 4 hingegen in beide Richtungen des Doppelpfeils 5 verstellen; hierfür muss lediglich ein Reibungswiderstand zwischen dem Querschlitten 4 und dem Spindelkopfgehäuse 3 überwunden werden.

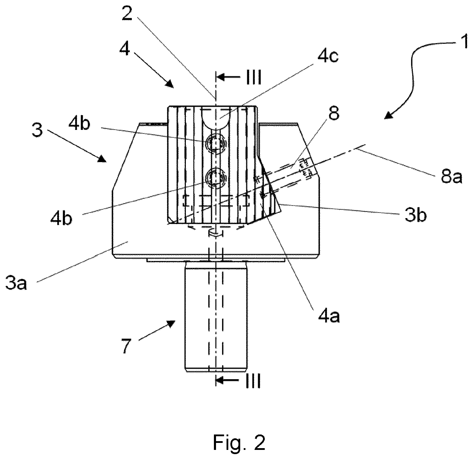

Aus Fig. 2 ist besonders gut ersichtlich, dass der Querschlitten 4 eine V-förmige Auskragung 4a aufweist. Die Auskragung 4a ist in einer der Auskragung 4a folgenden Aufnahmenut 3b des Spindelkopfgehäuses 3 schienenartig geführt aufgenommen, wie aus einer Zusammenschau der Fig. 1 und Fig. 2 ersichtlich ist. Der solchermaßen geführte Eingriff des Querschlittens 4 in das Spindelkopfgehäuse 3 stellt bezüglich der Spindelkopfdrehachse 2 eine axiale Auszugssicherung des Querschlittens 4 gegenüber dem Spindelkopfgehäuse 3 bereit.

In Fig. 2 ist für beide Arretierelemente 8 am Beispiel eines der Arretierelemente 8 ersichtlich, dass die Arretierelemente 8 in die Auskragung 4a eingeschraubt sind; Fig. 2 ist insoweit eine transparente Darstellung des Spindelkopfes 1. Eine Längsachse 8a des Arretierelements 8 ist gegenüber der Spindelkopfdrehachse 2 geneigt. Bezüglich der in Fig. 2 gewählten Darstellung heißt das, dass die Arretierelemente 8 von schräg oben betätigt werden können. Der Querschlitten 4 wird dadurch gleichzeitig axial und radial an die Aufnahmenut 3b angedrückt.

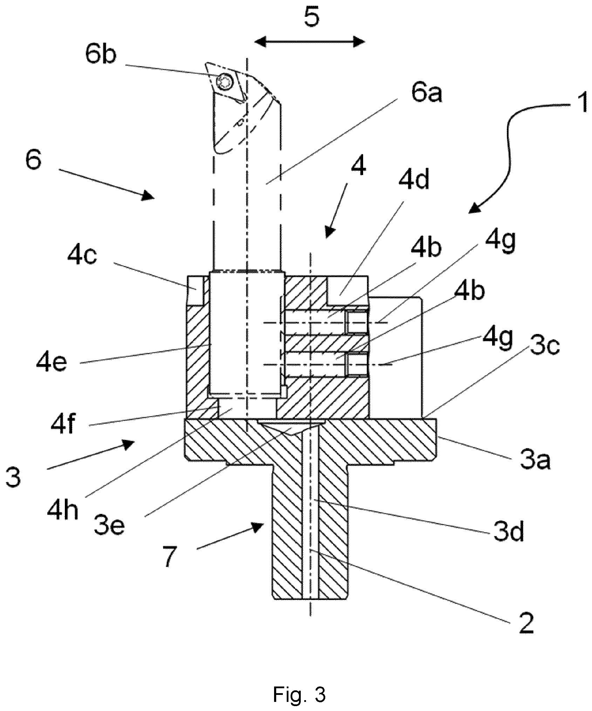

Fig. 2 zeigt ferner, dass der Querschlitten 4 zwei Befestigungselemente 4b in Form von jeweils einer Befestigungsschraube hat. Die Befestigungselemente 4b sind in den Querschlitten 4 eingeschraubt, um so das optionale Zerspanungswerkzeugs 6, welches in Fig. 3 nicht dargestellt ist, an dem Querschlitten 4 zu befestigen.

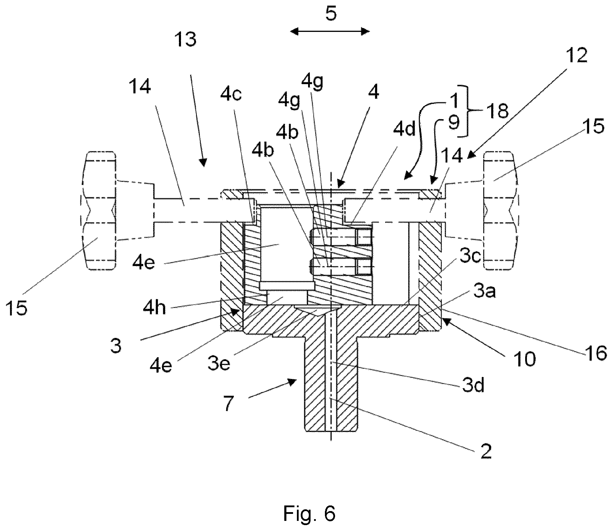

In Fig. 2 ist außerdem eine Einbuchtung 4c des Querschlittens 4 ersichtlich; eine dazu analog ausgebildete Einbuchtung 4d ist in Fig. 3 ersichtlich. Auf die Funktion der Einbuchtungen 4c und 4d wird Bezug nehmend auf Fig. 6 näher eingegangen.

Aus dem in Fig. 3 gezeigten Längsschnitt durch den Spindelkopf 1 ist der innere Aufbau des Spindelkopfes 1 besonders gut ersichtlich.

So ist in Fig. 3 zu erkennen, dass die Befestigungselemente 4b das optionale Zerspanungswerkzeug 6, welches innerhalb einer Werkzeugaufnahmeausnehmung 4e des Querschlittens 4 aufseiten des Werkzeugarms 6a angeordnet ist, gegen den Querschlitten 4 senkrecht zur Spindelkopfdrehachse 2 anschlagen. Auf diese Weise wird eine axiale Auszugssicherung des Zerspanungswerkzeugs 6 mittels einer zwischen dem Querschlitten 4 und dem Zerspanungswerkzeug 6 herrschenden Reibkraft bereitgestellt, das Zerspanungswerkzeug 6 also an dem Querschlitten 4 befestigt. Der Werkzeugarm 6a schlägt dabei gegen einen Vorsprung 4f der Werkzeugaufnahmeausnehmung 4e bezüglich der Spindelkopfdrehachse 2 axial an.

Eine jeweilige Längsachse 4g der Befestigungselemente 4b ist jeweils senkrecht zur Spindelkopfdrehachse 2 orientiert, weil dies eine senkrecht auf den Werkzeugarm 6a durch die Befestigungselemente 4b jeweils ausgeübte Anpresskraft maximiert.

Der Querschlitten 4 gleitet während einer Verstellung in eine der Richtungen des Doppelpfeils 5 auf einer ebenen Gehäusebodenfläche 3c des Spindelkopfgehäuses 3 und schlägt gegen die Gehäusebodenfläche 3c im bezüglich Fig. 1 und 2 beschriebenen arretierten Zustand bezüglich der Spindelkopfdrehachse 2 axial an.

Das Spindelkopfgehäuse 3 hat ein optionales internes Kühlmittelversorgungssystem, welches durch einen axialen Kanal 3d, welcher koaxial zur Spindelkopfdrehachse 2 innerhalb des Verbindungsabschnitts 7 verläuft, und eine Sacklochverteilungsbohrung 3e, welche die Gehäusebodenfläche 3c gegenüber der Spindelkopfdrehachse 2 exzentrisch unterbricht, gebildet wird. Der axiale Kanal 3d mündet in die Sacklochverteilungsbohrung 3e. Die Sacklochverteilungsbohrung 3e mündet in einen optionalen axialen Kanal 4h des Querschlittens 4, wobei sich der axiale Kanal 4h, welcher parallel zur Spindelkopfdrehachse 2 verläuft, und die Sacklochverteilungsbohrung 3e in Blickrichtung parallel zur Spindelkopfdrehachse 2 je nach der Verstellung des Querschlittens 4 teilweise, wie in Fig. 3 gezeigt, oder vollständig überlappen. Der axiale Kanal 4h mündet in die Werkzeugaufnahmeausnehmung 4e, so dass Kühlmittel durch den axialen Kanal 3d, die Sacklochverteilungsbohrung 3e und den axialen Kanal 4h zum optionalen Zerspanungswerkzeug 6 entlang einer solchermaßen definierten Strömungsrichtung gelangen kann, um das Zerspanungswerkzeug 6 intern zu durchströmen und aufseiten des Schneideinsatzes 6b aus dem Zerspanungswerkzeug 6 austreten zu können.

Fig. 3 zeigt außerdem die Einbuchtungen 4c und 4d im Längsschnitt, wobei zu erkennen ist, dass die in Fig. 3 gezeigte rechte Einbuchtung 4d eine senkrecht zur Spindelkopfdrehachse 2 bemessene größere maximale Tiefe hat als die in Fig. 3 gezeigte linke Einbuchtung 4c. Dementsprechend wurde innerhalb des Querschlittens 4 Platz für den gezeigten Versatz der Werkzeugaufnahmeausnehmung 4e in die in Fig. 3 gezeigte linke Richtung des Doppelpfeils 5 weg von der Spindelkopfdrehachse 2 geschaffen.

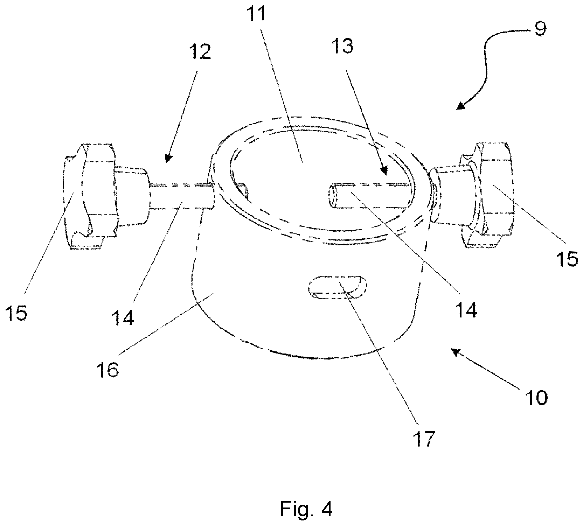

Fig. 4 zeigt eine Spindelkopfverstellvorrichtung 9. Die Spindelkopfverstellvorrichtung 9 ist dazu ausgebildet, den Querschlitten eines Spindelkopfes, zum Beispiel den Querschlitten 4 des Spindelkopfes 1, senkrecht zu einer Spindelkopfdrehachse, zum Beispiel der Spindelkopfdrehachse 2, zu verstellen.

Eine Querschlittenverstellung mittels der Spindelkopfverstellvorrichtung 9 wird im Folgenden am Beispiel einer Querschlittenverstellung des Querschlittens 4 exemplarisch beschrieben; denkbar und auch möglich ist es aber auch, dass der Querschlitten eines anderen Spindelkopfes mittels der Spindelkopfverstellvorrichtung 9 verstellt wird.

Ein durchgängig offener hohlzylindrischer Spindelkopfrahmen 10 der Spindelkopfverstellvorrichtung 9 wird auf die Gehäuseaußenseite 3a des Spindelkopfgehäuses 3 aufgesetzt; sonach ist der Spindelkopfrahmen 10 in die beiden Richtungen parallel zur Spindelkopfdrehachse 2 durchgängig offen. Der Spindelkopf 1 ist daher aufseiten seines Spindelkopfgehäuses 3 innerhalb eines von dem Spindelkopfrahmen 10 umfänglich umgegebenen Rahmeninnenbereichs 11 angeordnet.

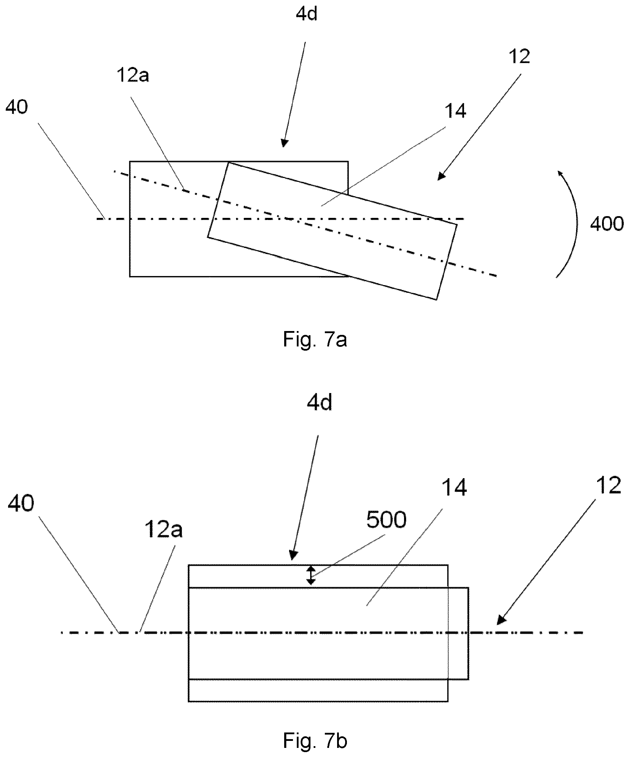

Der Spindelkopfrahmen 10 wird nach dem Aufsetzen oder während des Aufsetzens auf die Gehäuseaußenseite 3a jeweils so um die Spindelkopfdrehachse 2 gedreht, d. h. relativ zur Gehäuseaußenseite 3a, dass jedes von zwei in den Spindelkopfrahmen 10 gegenüberliegend zueinander eingeschraubten Verstellelementen 12 und 13 parallel zum Doppelpfeil 5 verstellt werden kann; eine solche Parallelausrichtung kann direkt nach Augenmaß eines Bedieners oder durch ein Ausfahren zumindest eines der Verstellelemente 12 oder 13 unter einer anfänglichen Schrägstellung zum Doppelpfeil 5 in den Rahmeninnenbereich 11 hinein erfolgen. Auf letzteres wird Bezug nehmend auf die Fig. 7a und 7b näher eingegangen.

Der Querschlitten 4 kann durch ein Ausfahren des Verstellelements 12 in den Rahmeninnenbereich 11 hinein in die rechte Richtung des Doppelpfeils 5 gemäß Fig. 1 verstellt werden, sofern das Verstellelement 13 dafür hinreichend weit aus dem Rahmeninnenbereich 11 heraus eingefahren wurde oder wird. Analoges gilt für ein Ausfahren des Verstellelements 13 in den Rahmeninnenbereich 11 hinein und ein dafür ggf. benötigtes Einfahren des Verstellelements 12 aus dem Rahmeninnenbereich 11 heraus.

Die Verstellelemente 12 und 13 werden jeweils dadurch verstellt, also wahlweise in den Rahmeninnenbereich 11 hinein ausgefahren oder aus dem Rahmeninnenbereich 11 heraus eingefahren, indem die Verstellelemente 12 und 13 jeweils gemäß einer mit dem Spindelkopfrahmen 10 gebildeten Gewindeverbindung im Sinne einer Schraube gedreht werden. Jedes der Verstellelemente 12 und 13 hat daher einen Außengewindeabschnitt 14, im Bereich dessen die Verstellelemente 12 und 13 jeweils in den Spindelkopfrahmen 10 eingeschraubt sind.

Die Außengewindeabschnitte 14 sind jeweils als Rechtsgewinde ausgebildet, so dass eine außerhalb des Rahmeninnenbereichs 11 initiierte Rechtsdrehung jeweils zu einem Ausfahren der Verstellelemente 12 und 13 in den Rahmeninnenbereich hinein führt und eine außerhalb des Rahmeninnenbereichs 11 initiierte Linksdrehung zu einem Einfahren der Verstellelemente 12 und 13 aus dem Rahmeninnenbereich 11 heraus führt; denkbar und auch möglich ist aber auch eine Ausbildung als jeweils Linksgewinde. Solchermaßen kann ein Bediener die Verstellelemente 12 und 13 jeweils so betätigen, d. h. drehen, dass eines der Verstellelemente 12 oder 13 ausgefahren wird und das andere der Verstellelemente 12 oder 13 eingefahren wird und umgekehrt. Ersteres, um den Querschlitten 4 zu verstellen, letzteres, um die Verstellung des Querschlittens 4 nicht zu blockieren. Für ein solches Drehen der Verstellelemente 12 und 13 weisen die Verstellelemente 12 und 13 jeweils einen Drehantriebsabschnitt 15 auf, der außerhalb des Rahmeninnenbereichs 11 angeordnet ist. Die Drehantriebabschnitte 15 sind jeweils als Drehknauf ausgebildet.

Der Drehantriebsabschnitt 15 des Verstellelements 12 schlägt beim Erreichen einer maximalen Verstellung des Verstellelements 12 in den Rahmeninnenbereich 11 hinein gegen eine Außenseite 16 des Spindelkopfrahmens 10 im Sinne eines Schraubenkopfes an, so dass dadurch ein maximaler Verstellweg von dem Verstellelement 12 beim Ausfahren begrenzt wird. Analoges gilt für den Drehantriebsabschnitt 15 des Verstellelements 13.

Der Spindelkopfrahmen 10 weist mindestens eine durchgängig offene Einführungsausnehmung 17 in Form eines Langlochs auf. Durch die Einführungsausnehmung 17 hindurch kann ein Stellwerkzeugabschnitt, zum Beispiel das vordere Ende eines Schraubendrehers, in den Rahmeninnenbereich 11 eingeführt werden, um die innerhalb des Rahmeninnenbereichs 11 befindlichen Arretierelemente 8 zu verstellen. Der Querschlitten 4 kann also arretiert werden, während der Spindelkopfrahmen 10 auf der Gehäuseaußenseite 3a aufsitzt.

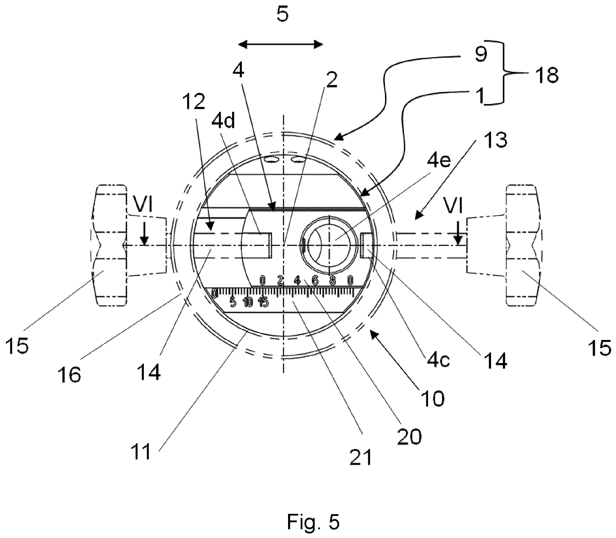

Fig. 5 und 6 zeigen ein Spindelkopfsystem 18. Das Spindelkopfsystem 18 umfasst den Spindelkopf 1 und die Spindelkopfverstellvorrichtung 9, welche auf die Gehäuseseite 3a aufgesetzt angeordnet ist, und zwar kraftschlüssig.

In der Zusammenschau von Fig. 5 und Fig. 6 ist besonders gut ersichtlich, dass der Querschlitten 4 in die rechte Richtung des Doppelpfeils 5 maximal verstellt wurde; der Querschlitten 4 schlägt also solchermaßen verstellt gegen den Spindelkopfrahmen 10 an.

Das Verstellelement 12 hat dementsprechend einen maximalen Verstellweg in die rechte Richtung des Doppelpfeils 5 beim Ausfahren in den Rahmeninnenbereich 11 zurückgelegt. Dabei ragt das Verstellelement 12 in die Einbuchtung 4d hinein, um den Querschlitten 4 innerhalb der Einbuchtung 4d zu kontaktieren.

Die Einbuchtung 4d sorgt für eine seitliche Führung des Verstellelements 12 senkrecht zum Doppelpfeil 5, weil die Einbuchtung 4d dem Verstellelement 12 folgend ausgebildet ist. Das Verstellelement 13 wurde für die beschriebene maximale Verstellung des Querschlittens 4 in die rechte Richtung des Doppelpfeils 5 aus dem Rahmeninnenbereich 11 heraus hinreichend weit eingefahren, wobei das Verstellelement 13 in die Einbuchtung 4c hineinragt. Durch letztere Maßnahme kann der Querschlitten 4 parallel zum Doppelpfeil 5 in die linke Richtung des Doppelpfeils 5 durch ein Ausfahren des Verstellelements 13 unter seitlicher Führung durch die Einbuchtung 4c zurückgestellt werden; das Verstellelement 12 muss dafür aus dem Rahmeninnenbereich 11 soweit heraus in die linke Richtung des Doppelpfeils 5 eingefahren werden, dass die durch das Verstellelemente 13 bewirkte Verstellung nicht blockiert wird.

In Fig. 5 ist besonders gut ersichtlich, dass die Einbuchtungen 4c und 4d in Blickrichtung parallel zur Spindelkopfdrehachse 2 aufseiten der Werkzeugaufnahmeausnehmung 4e als offene Längsnuten jeweils ausgebildet sind. Die Verstellelemente 12 und 13 können durch Aufsetzen des Spindelkopfrahmens 10 parallel zur Blickrichtung aus Fig. 5 in die Längsnuten 4c und 4c abschnittsweise eingesetzt werden; entweder unter einer anfänglichen Schrägstellung oder bereits parallel zum Doppelpfeil 5. Auf die Schrägstellung wird Bezug nehmend auf Fig. 7a und Fig. 7b näher eingegangen.

Aus Fig. 5 ist außerdem ersichtlich, dass der Querschlitten 4 eine optionale Skala 20 aufweist und das Spindelkopfgehäuse 3 eine der Skala 20 gegenüberliegende optionale Skala 21. Die Skalen 20 und 21 bilden einen Nonius, so dass die Verstellung des Querschlittens 4 unmittelbar von dem solchermaßen gebildeten Nonius abgelesen werden kann.

Fig. 6 verdeutlicht aufgrund des spaltfreien Kontakts zwischen dem Spindelkopfrahmen 10 und der Gehäuseaußenseite 3a unterhalb von der Gehäusebodenfläche 3c, dass der Spindelkopfrahmen 10 auf das Spindelkopfgehäuse 3 kraftschlüssig aufgesetzt ist.

Fig. 7a und Fig. 7b zeigen in einer Zusammenschau exemplarisch das Zusammenwirken der Einbuchtung 4d mit dem Verstellelement 12 im Bereich des Außengewindeabschnitts 14. Die Blickrichtung in Fig. 7a und 7b ist mit der Blickrichtung aus Fig. 5 jeweils identisch, also parallel zur Spindelkopfdrehachse 2.

Das Verstellelement 12 ist in Fig. 7a unter einer anfänglichen Schrägstellung in die Einbuchtung 4d hinein eingefahren angeordnet. Diese Schrägstellung äußert sich darin, dass eine Längsachse 12a des Verstellelements 12 zu einer Längsachse 40 der Einbuchtung 4d schräg angeordnet ist, die Längsachsen 12a und 40 kreuzen sich also in Blickrichtung parallel zur Spindelkopfdrehachse 2; die Längsachse 40 ist die Längsachse, parallel zu welcher sich die Einbuchtung 4d erstreckt, solchermaßen also parallel zum Doppelpfeil 5 orientiert ist.

Bei einem weiteren Ausfahren, beginnend von der in Fig. 7a gezeigten anfänglichen Schrägstellung bis hin zu der in Fig. 7b gezeigten Parallelstellung, des Verstellelements 12 in die Einbuchtung 4d hinein, drehen sich das Verstellelement 12 und damit der nicht dargestellte Spindelkopfrahmen 10 in eine Drehrichtung 400, also um die Spindelkopfdrehachse 2 exemplarisch gegen den Uhrzeigersinn, so, dass die Längsachsen 12a und 40 zueinander fluchten und das Verstellelement 12, wie in Fig. 7b gezeigt, parallel zur Längsachse 40 gegen die Einbuchtung 4d anschlägt.

Das für eine solchermaßen realisierte Ausrichtung des Verstellelements 12 parallel zur Längsachse 40 und damit zum Doppelpfeil 5 benötigte Spiel zwischen dem Verstellelement 12 und der Einbuchtung 4d ist mit dem Bezugszeichen 500 in Fig. 7b versehen; ein senkrecht zur Längsachse12a bemessene Spiel ist aus Gründen der Anschaulichkeit übertrieben groß in Fig. 7b dargestellt.

Die Ausrichtung des Verstellelements 13 unter einer analogen Schrägstellung gegenüber der Ausbuchtung 4c erfolgt der beschriebenen Ausrichtung des Verstellelements 12 analog.

## Patentansprüche

1. Spindelkopfsystem (18), umfassend einen Spindelkopf (9) und eine Spindelkopfverstellvorrichtung (1), wobei der Spindelkopf (9) ein sich entlang einer Spindelkopfdrehachse (2) erstreckendes Spindelkopfgehäuse (3) und einen von dem Spindelkopfgehäuse (3) zur Spindelkopfdrehachse (2) senkrecht verstellbar gelagerten Querschlitten (4) aufweist und die Spindelkopfverstellvorrichtung (1) zur Querschlittenverstellung des Querschlittens (4) ausgebildet ist, wobei die Spindelkopfverstellvorrichtung (1) einen Spindelkopfrahmen (10) zum Aufsetzen auf den Spindelkopf (9), ein erstes Verstellelement (12, 13) und ein gegenüberliegend von dem ersten Verstellelement (12, 13) angeordnetes zweites Verstellelement (12, 13) aufweist, wobei das erste Verstellelement (12, 13) und das zweite Verstellelement (12, 13) jeweils an dem Spindelkopfrahmen (10) in einen Rahmeninnenbereich (11) des Spindelkopfrahmens (10) hinein ausfahrbar und aus dem Rahmeninnenbereich (11) heraus einfahrbar gelagert sind, wobei der Spindelkopfrahmen (10) auf eine Gehäuseaußenseite (3a) des Spindelkopfgehäuses (3) reversibel lösbar aufsetzbar ausgebildet ist, **dadurch gekennzeichnet, dass** der Querschlitten (4) eine erste Einbuchtung (4c, 4d) zur seitlichen Führung des ersten Verstellelements (12, 13) aufweist, die erste Einbuchtung (4c, 4d) sich parallel zu einer senkrecht zur Spindelkopfdrehachse (2) orientierten Verstellrichtung (5) des Querschlittens (4) erstreckt und das erste Verstellelement (12, 13) in die erste Einbuchtung (4c, 4d) hinein ausfahrbar am Spindelkopfrahmen (10) gelagert ist.

2. Spindelkopfsystem (18) nach Anspruch 1, wobei die erste Einbuchtung (4c, 4d) in Blickrichtung parallel zur Spindelkopfdrehachse (2) offen ausgebildet ist.

3. Spindelkopfsystem (18) nach Anspruch 1 oder 2, wobei der Spindelkopfrahmen (10) relativ zur Gehäuseaußenseite (3a) um die Spindelkopfdrehachse (2) drehbar aufsetzbar ausgebildet ist und die erste Einbuchtung (4c, 4d) derart ausgebildet ist, dass das erste Verstellelement (12, 13) in Blickrichtung parallel zur Spindelkopfdrehachse (2) unter einer anfänglichen Schrägstellung zur ersten Einbuchtung (4c, 4d) in die erste Einbuchtung (4c, 4d) hinein ausfahrbar am Spindelkopfrahmen (10) gelagert ist.

4. Spindelkopfsystem (18) nach einem der vorhergehenden Ansprüche, wobei der Querschlitten (4) eine zweite Einbuchtung (4c, 4d) zur seitlichen Führung des zweiten Verstellelements (12, 13) aufweist, die zweite Einbuchtung (4c, 4d) sich parallel zur Verstellrichtung (5) des Querschlittens (4) erstreckt, das zweite Verstellelement (12, 13) in die zweite Einbuchtung (4c, 4d) hinein ausfahrbar am Spindelkopfrahmen (10) gelagert ist und eine senkrecht zur Spindelkopfdrehachse (2) bemessene maximale Tiefe der zweiten Einbuchtung (4c, 4d) von einer senkrecht zur Spindelkopfdrehachse (2) bemessenen maximalen Tiefe der ersten Einbuchtung (4c, 4d) verschieden ist.

5. Spindelkopfsystem (18) nach einem der vorhergehenden Ansprüche, wobei der Spindelkopf (9) ein verstellbares Arretierelement (8) zum reversibel lösbaren Arretieren des Querschlittens (4) relativ zum Spindelkopfgehäuse (3) aufweist und die Spindelkopfverstellvorrichtung (1) nach Anspruch 12 ausgebildet ist.

6. Spindelkopfsystem (18) nach einem der vorhergehenden Ansprüche, wobei der Rahmeninnenbereich (11) durchgängig offen ausgebildet ist.

7. Spindelkopfsystem (18) nach einem der vorhergehenden Ansprüche, wobei mindestens das erste Verstellelement (12, 13) zur Umwandlung einer Drehbewegung in eine lineare Verstellbewegung an dem Spindelkopfrahmen (10) gelagert ist.

8. Spindelkopfsystem (18) nach einem der vorhergehenden Ansprüche, wobei das erste Verstellelement (12, 13) und das zweite Verstellelement (12, 13) jeweils ein in den Spindelkopfrahmen (10) eingeschraubtes Außengewinde aufweisen und die Drehrichtung des Außengewindes von dem ersten Verstellelement (12, 13) der Drehrichtung des Außengewindes von dem zweiten Verstellelement (12, 13) gleich ist.

9. Spindelkopfsystem (18) nach Anspruch 7 oder 8, wobei mindestens das erste Verstellelement (12, 13) einen Drehantriebsabschnitt (15) zum Drehantreiben des ersten Verstellelements (12, 13) aufweist, der Drehantriebsabschnitt (15) außerhalb des Rahmeninnenbereichs (11) angeordnet ist und einen Anschlag zum Anschlagen gegen eine Rahmenaußenseite (16) des Spindelkopfrahmens (10) bezüglich eines Ausfahrens des ersten Verstellelements (12, 13) in den Rahmeninnenbereich (11) hinein bildet.

10. Spindelkopfsystem (18) nach Anspruch 9, wobei der Drehantriebsabschnitt (15) einen maximalen translatorischen Verstellweg des ersten Verstellelements (12, 13) beim Ausfahren in den Rahmeninnenbereich (11) hinein begrenzend ist und der maximale translatorische Verstellweg im Bereich von 5 mm bis 20 mm liegt.

11. Spindelkopfsystem (18) nach einem der vorhergehenden Ansprüche, wobei der Spindelkopfrahmen (10) als sich entlang einer Zylinderachse (2) erstreckender durchgängig offener Hohlzylinderkörper (10) ausgebildet ist, der Spindelkopfrahmen (10) den Rahmeninnenbereich (11) umfänglich geschlossen umgebend ausgebildet ist und mindestens das erste Verstellelement (12, 13) senkrecht zur Zylinderachse (2) verstellbar an dem Spindelkopfrahmen (10) gelagert.

12. Spindelkopfsystem (18) nach einem der vorhergehenden Ansprüche, wobei der Spindelkopfrahmen (10) eine durchgängig offene Einführungsausnehmung (17) zum Einführen eines Stellwerkzeugabschnitts in den Rahmeninnenbereich (11) hinein aufweist.

## Claims

1. Spindle-head system (18), comprising a spindle head (9) and a spindle-head-adjusting device (1), wherein the spindle head (9) has a spindle-head housing (3), extending along a spindle-head axis of rotation (2), and has a cross slide (4), mounted so as to be perpendicularly adjustable in relation to the spindle-head axis of rotation (2) from the spindle-head housing (3), and the spindle-head-adjusting device (1) is configured for cross-slide adjustment of the cross slide (4), wherein the spindle-head-adjusting device (1) has a spindle-head frame (10) for being placed onto the spindle head (9), has a first adjustment element (12, 13) and a second adjustment element (12, 13), which is arranged opposite the first adjustment element (12, 13), wherein the first adjustment element (12, 13) and the second adjustment element (12, 13) are each mounted on the spindle-head frame (10) so as to be extendable into a frame inner region (11) of the spindle-head frame (10) and retractable out of the frame inner region (11), wherein the spindle-head frame (10) is configured to be placeable onto a housing outer side (3a) of the spindle-head housing (3) in a reversibly releasable manner, **characterized in that** the cross slide (4) has a first indentation (4c, 4d) for lateral guidance of the first adjustment element (12, 13), the first indentation (4c, 4d) extends parallel to an adjustment direction (5), which is oriented perpendicularly to the spindle-head axis of rotation (2), of the cross slide (4), and the first adjustment element (12, 13) is mounted on the spindle-head frame (10) so as to be extendable into the first indentation (4c, 4d).

2. Spindle-head system (18) according to Claim 1, wherein, in a viewing direction parallel to the spindle-head axis of rotation (2), the first indentation (4c, 4d) is of open form.

3. Spindle-head system (18) according to Claim 1 or 2, wherein the spindle-head frame (10) is configured to be placeable so as to be rotatable about the spindle-head axis of rotation (2) relative to the housing outer side (3a) and the first indentation (4c, 4d) is formed in such a way that, in a viewing direction parallel to the spindle-head axis of rotation (2), the first adjustment element (12, 13) is mounted on the spindle-head frame (10) so as to be extendable into the first indentation (4c, 4d) at an initial oblique position in relation to the first indentation (4c, 4d).

4. Spindle-head system (18) according to one of the preceding claims, wherein the cross slide (4) has a second indentation (4c, 4d) for lateral guidance of the second adjustment element (12, 13), the second indentation (4c, 4d) extends parallel to the adjustment direction (5) of the cross slide (4), the second adjustment element (12, 13) is mounted on the spindle-head frame (10) so as to be extendable into the second indentation (4c, 4d), and a maximum depth of the second indentation (4c, 4d) measured perpendicularly to the spindle-head axis of rotation (2) is different from a maximum depth of the first indentation (4c, 4d) measured perpendicularly to the spindle-head axis of rotation (2).

5. Spindle-head system (18) according to one of the preceding claims, wherein the spindle head (9) has an adjustable arresting element (8) for reversibly releasable arresting of the cross slide (4) relative to the spindle-head housing (3) and the spindle-head-adjusting device (1) is formed according to Claim 12.

6. Spindle-head system (18) according to one of the preceding claims, wherein the frame inner region (11) is of continuously open form.

7. Spindle-head system (18) according to one of the preceding claims, wherein at least the first adjustment element (12, 13) is mounted on the spindle-head frame (10) so as to convert a rotational movement into a linear adjusting movement.

8. Spindle-head system (18) according to one of the preceding claims, wherein the first adjustment element (12, 13) and the second adjustment element (12, 13) each have an external thread which is screwed into the spindle-head frame (10), and the direction of rotation of the external thread of the first adjustment element (12, 13) is the same as the direction of rotation of the external thread of the second adjustment element (12, 13).

9. Spindle-head system (18) according to Claim 7 or 8, wherein at least the first adjustment element (12, 13) has a rotary-drive portion (15) for driving the first adjustment element (12, 13) in rotation, and the rotary-drive portion (15) is arranged outside the frame inner region (11) and forms a stop for abutment against a frame outer side (16) of the spindle-head frame (10) in relation to an extension of the first adjustment element (12, 13) into the frame inner region (11).

10. Spindle-head system (18) according to Claim 9, wherein the rotary-drive portion (15) limits a maximum translational adjustment travel of the first adjustment element (12, 13) during extension into the frame inner region (11), and the maximum translational adjustment travel lies in the range from 5 mm to 20 mm.

11. Spindle-head system (18) according to one of the preceding claims, wherein the spindle-head frame (10) is in the form of a continuously open hollowcylinder body (10) extending along a cylinder axis (2), the spindle-head frame (10) is formed so as to surround the frame inner region (11) in an circumferentially closed manner, and at least the first adjustment element (12, 13) is mounted on the spindle-head frame (10) so as to be adjustable perpendicularly to the cylinder axis (2).

12. Spindle-head system (18) according to one of the preceding claims, wherein the spindle-head frame (10) has a continuously open introduction cutout (17) for introduction of an adjustment-tool portion into the frame inner region (11).

## Revendications

1. Système de tête de broche (18), comprenant une tête de broche (9) et un dispositif de réglage de tête de broche (1), la tête de broche (9) présentant un boîtier de tête de broche (3) s'étendant le long d'un axe de rotation de tête de broche (2) et un chariot transversal (4) monté de manière réglable depuis le boîtier de tête de broche (3) perpendiculairement à l'axe de rotation de tête de broche (2), et le dispositif de réglage de tête de broche (1) étant réalisé pour le réglage de chariot transversal du chariot transversal (4), le dispositif de réglage de tête de broche (1) présentant un cadre de tête de broche (10) destiné à être posé sur la tête de broche (9), un premier élément de réglage (12, 13) et un deuxième élément de réglage (12, 13) agencé à l'opposé du premier élément de réglage (12, 13), le premier élément de réglage (12, 13) et le deuxième élément de réglage (12, 13) étant respectivement montés sur le cadre de tête de broche (10) de manière à pouvoir être déployés dans une zone intérieure de cadre (11) du cadre de tête de broche (10) et à pouvoir être rétractés hors de la zone intérieure de cadre (11), le cadre de tête de broche (10) étant réalisé de manière à pouvoir être posé de manière amovible et réversible sur un côté extérieur de boîtier (3a) du boîtier de tête de broche (3), **caractérisé en ce que** le chariot transversal (4) présente un premier renfoncement (4c, 4d) pour le guidage latéral du premier élément de réglage (12, 13), le premier renfoncement (4c, 4d) s'étendant parallèlement à une direction de réglage (5) du chariot transversal (4) orientée perpendiculairement à l'axe de rotation de tête de broche (2) et le premier élément de réglage (12, 13) étant monté sur le cadre de tête de broche (10) de manière à pouvoir être déployé dans le premier renfoncement (4c, 4d).

2. Système de tête de broche (18) selon la revendication 1, dans lequel le premier renfoncement (4c, 4d) est réalisé ouvert dans la direction d'observation parallèlement à l'axe de rotation de tête de broche (2).

3. Système de tête de broche (18) selon la revendication 1 ou 2, dans lequel le cadre de tête de broche (10) est réalisé de manière à pouvoir être placé en rotation autour de l'axe de rotation de tête de broche (2) par rapport au côté extérieur de boîtier (3a), et le premier renfoncement (4c, 4d) est réalisé de telle sorte que le premier élément de réglage (12, 13) est monté sur le cadre de tête de broche (10) de manière à pouvoir être déployé dans le premier renfoncement (4c, 4d) dans une direction d'observation parallèlement à l'axe de rotation de tête de broche (2) avec une position inclinée initiale par rapport au premier renfoncement (4c, 4d).

4. Système de tête de broche (18) selon l'une quelconque des revendications précédentes, dans lequel le chariot transversal (4) présente un deuxième renfoncement (4c, 4d) pour le guidage latéral du deuxième élément de réglage (12, 13), le deuxième renfoncement (4c, 4d) s'étendant parallèlement à la direction de réglage (5) du chariot transversal (4), le deuxième élément de réglage (12, 13) étant monté sur le cadre de tête de broche (10) de manière à pouvoir être déployé dans le deuxième renfoncement (4c, 4d) et une profondeur maximale du deuxième renfoncement (4c, 4d), dimensionnée perpendiculairement à l'axe de rotation de tête de broche (2), étant différente d'une profondeur maximale du premier renfoncement (4c, 4d), dimensionnée perpendiculairement à l'axe de rotation de tête de broche (2) .

5. Système de tête de broche (18) selon l'une quelconque des revendications précédentes, dans lequel la tête de broche (9) présente un élément de blocage réglable (8) pour bloquer le chariot transversal (4) de manière amovible et réversible par rapport au boîtier de tête de broche (3), et le dispositif de réglage de tête de broche (1) étant réalisé selon la revendication 12.

6. Système de tête de broche (18) selon l'une quelconque des revendications précédentes, dans lequel la zone intérieure de cadre (11) est réalisée ouverte en continu.

7. Système de tête de broche (18) selon l'une quelconque des revendications précédentes, dans lequel au moins le premier élément de réglage (12, 13) est monté sur le cadre de tête de broche (10) pour convertir un mouvement de rotation en un mouvement de réglage linéaire.

8. Système de tête de broche (18) selon l'une quelconque des revendications précédentes, dans lequel le premier élément de réglage (12, 13) et le deuxième élément de réglage (12, 13) présentent chacun un filetage extérieur vissé dans le cadre de tête de broche (10), et la direction de rotation du filetage extérieur du premier élément de réglage (12, 13) est la même que la direction de rotation du filetage extérieur du deuxième élément de réglage (12, 13).

9. Système de tête de broche (18) selon la revendication 7 ou 8, dans lequel au moins le premier élément de réglage (12, 13) présente une section d'entraînement en rotation (15) pour entraîner en rotation le premier élément de réglage (12, 13), la section d'entraînement en rotation (15) étant agencée à l'extérieur de la zone intérieure de cadre (11) et formant une butée pour venir en butée contre un côté extérieur de cadre (16) du cadre de tête de broche (10) par rapport à un déploiement du premier élément de réglage (12, 13) dans la zone intérieure de cadre (11).

10. Système de tête de broche (18) selon la revendication 9, dans lequel la section d'entraînement en rotation (15) limite une course de réglage en translation maximale du premier élément de réglage (12, 13) lors du déploiement dans la zone intérieure de cadre (11), et la course de réglage en translation maximale se situe dans la plage allant de 5 mm à 20 mm.

11. Système de tête de broche (18) selon l'une quelconque des revendications précédentes, dans lequel le cadre de tête de broche (10) est réalisé sous forme de corps cylindrique creux (10) ouvert en continu, s'étendant le long d'un axe de cylindre (2), le cadre de tête de broche (10) est réalisé de manière à entourer la zone intérieure de cadre (11) de manière entièrement fermée et au moins le premier élément de réglage (12, 13) est monté sur le cadre de tête de broche (10) de manière à pouvoir être réglé perpendiculairement à l'axe de cylindre (2).

12. Système de tête de broche (18) selon l'une quelconque des revendications précédentes, dans lequel le cadre de tête de broche (10) présente un évidement d'introduction (17) ouvert en continu pour introduire une section d'outil de réglage dans la zone intérieure de cadre (11).
